# EUROPEAN PATENT APPLICATION

(11) **EP 3 228 474 A1**
(43) Date of publication of application: **11.10.2017**
(21) Application number: 15866321.1
(22) Date of filing: 04.12.2015
(51) Int. Cl.: B60B 5/02, B60B 21/06

(54) **VEHICULAR COMPOSITE WHEEL FASTENING STRUCTURE**

(30) Priority: 05.12.2014 KR 20140173753
(71) Applicant: Industry-Academic Cooperation Foundation Gyeongsang National University, Jinju-si, Gyeongsangnam-do 52828 (KR)
(72) Inventor: CHOI, Jin Ho, Jinju-si Gyeongsangnam-do 52667 (KR); KWEON, Jin Hwe, Jinju-si Gyeongsangnam-do 52827 (KR)
(74) Representative: Bertsch, Florian Oliver
(86) International application number: PCT/KR2015/013220
(87) International publication number: WO 2016/089160

(57) **Abstract**

The present invention relates to a wheel assembly that is a chassis of a vehicle, and more particularly, to a vehicular composite wheel fastening structure in which a vehicular wheel assembly is formed of a fiber-reinforced composite and a connection portion structure of a composite wheel including a spoke portion and a rim portion is simplified to enable automated fabrication.

## Description

### [Technical Field]

The present invention relates to a wheel assembly that is a chassis of a vehicle, and more particularly, to a vehicular composite wheel fastening structure capable of fabricating a composite wheel using an automation equipment by simplifying a connection portion structure between a spoke portion and a rim portion of a composite wheel in forming a vehicular wheel assembly using a fiber-reinforced composite.

### [Background Art]

Generally, a driving wheel of a vehicle is called a wheel, but when the driving wheel is divided in more detail, the driving wheel is divided into the wheel and a tire.

The wheel is configured to support the entire weight of the vehicle and be connected to a shaft of the vehicle to transfer driving force and braking force to a road surface, and the tire, which is formed of an elastic material, has air filled therein and is configured to surround the wheel to alleviate impact and vibrations of the wheel depending on unevenness of the road surface and finally transfer the driving force and the braking force of the wheel to the road surface by friction with the road surface.

The vehicular wheel having the configuration as described above includes a rim supporting the tire and a spoke supporting the ring to a hub. The wheel may be classified depending on references such as a material, a fabrication method, a structure, and a design thereof.

The wheel is classified into a steel wheel formed of steel, an aluminum wheel formed of an aluminum alloy, a magnesium wheel formed of a magnesium alloy, and the like, depending on the material thereof. The material of the wheel is directly associated with a weight of the vehicle, and in a hybrid vehicle that has been recently developed, lightness of the vehicle has become an important issue in terms of improvement of energy efficiency and fuel efficiency. Therefore, the necessity for a vehicular wheel having a light weight while maintaining strength has also emerged.

In accordance with such a necessity, a composite wheel using a reinforced fiber has been recently developed. The composite wheel is formed of a material much lighter than that of the steel wheel, the aluminum wheel, or the like, described above, and has strength similar to or higher than that of the existing wheel.

However, since the composite wheel recently developed is fabricated in a form in which prepreg for a rim and prepreg for a spoke are alternately stacked on a mold and are then hardened, a process of fabricating the composite wheel depends on handwork, such that a process speed is very slow and a fabrication cost is very high. Therefore, such a composite wheel has been restrictively used in only vehicles for Formula one (F-1) racing.

Therefore, the development of a vehicular composite wheel capable of being fabricated at a rapid process speed through automated production and being used in general vehicles or green cars through a reduction in a fabrication cost has been demanded.

### [Disclosure]

### [Technical Problem]

An object of the present invention is to provide a composite wheel formed by assembling a rim portion formed of a composite and a spoke portion formed of a composite or a metal, and particularly, provide a vehicular composite wheel fastening structure enabling automated production of a composite wheel through a connection structure that may simply assemble a rim portion and a spoke portion in a state in which the rim portion formed of a composite is hardened.

### [Technical Solution]

In one general aspect, a vehicular composite wheel fastening structure of a vehicular composite wheel including a spoke portion including a plurality of spokes and a rim portion coupled to the spoke portion and having an annular shape includes: first coupling portions bent and extended from distal ends of each of the spokes of the spoke portion toward the rim portion and including wedge grooves formed in an axial direction of the wheel and fastening grooves formed on the wedge grooves; a plurality of second coupling portions formed along a circumference of the rim portion so that the first coupling portions are fitted and coupled thereinto; and fastening members coupled to the wedge grooves, wherein in the first coupling portion, a width of the wedge groove in a circumferential direction is increased at the time of coupling the fastening member to the first coupling member.

A diameter of the fastening hole may be decreased toward an outer diameter direction of the wheel, a width of the first coupling portion or the second coupling portion in the circumferential direction may be increased toward an inward axial direction of the wheel, and a thickness of the first coupling portion or the second coupling portion in a radial direction may be increased toward an inner diameter direction of the wheel.

The width of the wedge groove in the circumferential direction may be decreased toward an inner diameter direction of the wheel.

In another general aspect, support blocks having cross-sectional areas greater than those of the first coupling portions may be coupled to distal ends of the first coupling portions.

In another general aspect, the composite wheel may include an auxiliary rim of which an outer peripheral surface is fitted and coupled into an inner peripheral surface of the rim portion, and the first coupling portions may be fitted and coupled between the rim and the auxiliary rim.

The spoke portion or the rim portion may be formed of a composite obtained by stacking and then hardening prepreg.

### [Advantageous Effects]

The vehicular composite wheel fastening structure according to the present invention having the configuration as described above may maintain strength similar to or higher than that of an existing steel wheel or aluminum wheel, may decease a weight of a composite wheel to improve a lightness effect of a vehicle, may accomplish excellent energy efficiency, and may contribute to improvement of fuel efficiency of the vehicle.

Particularly, a fabrication process may be simplified to enable automated product. Therefore, a process speed may be increased and a fabrication cost may be reduced, such that the composite wheel may be used in a general vehicle market and a green car.

### [Description of Drawings]

FIG. 1 is a schematic assembled perspective view of a composite wheel according to an exemplary embodiment of the present invention.
FIG. 2 is a schematic exploded perspective view of the composite wheel according to an exemplary embodiment of the present invention.
FIG. 3 is a plan view of coupling portions of a spoke and a rim according to an exemplary embodiment of the present invention.
FIGS. 4A and 4B are cross-sectional views of the coupling portions of the spoke and the rim according to an exemplary embodiment of the present invention.
FIG. 5 is an exploded perspective view of a spoke portion according to another exemplary embodiment of the present invention.
FIG. 6 is a schematic exploded perspective view of a composite wheel according to another exemplary embodiment of the present invention.

### [Detailed Description of Main Elements]

| | |
|---|---|
| 1000: vehicular composite wheel | |
| 100: spoke portion | 110: hub |
| 115: spoke | 120: first coupling portion |
| 121: wedge groove | 125: fastening hole |
| 200: rim portion | 201: outer rim |
| 202: center rim | 203: inner rim |
| 210: second coupling portion | |
| 300: fastening member | |
| 400: support block | |
| 500: auxiliary rim | 510: auxiliary body |
| 515: auxiliary fastening hole | |

### [Best Mode]

An example of a composite includes a carbon fiber composite, a glass fiber composite, or the like, and an existing composite wheel was fabricated in a form in which prepreg for a rim and prepreg for a spoke are alternately stacked on a mold, are hardened, and are then assembled. Therefore, precise work is required, and thus, a process of fabricating the composite wheel cannot but depend on handwork, such that a process time is increased and a fabrication cost is very high. Therefore, the present invention is to provide a vehicular composite wheel of which a fabrication process may be automated by suggesting a connection portion structure of capable of assembling a rim formed by stacking and hardening composites to a spoke portion formed of a composite or a metal.

Hereinafter, an exemplary embodiment of the present invention will be described in detail with reference to the drawings.

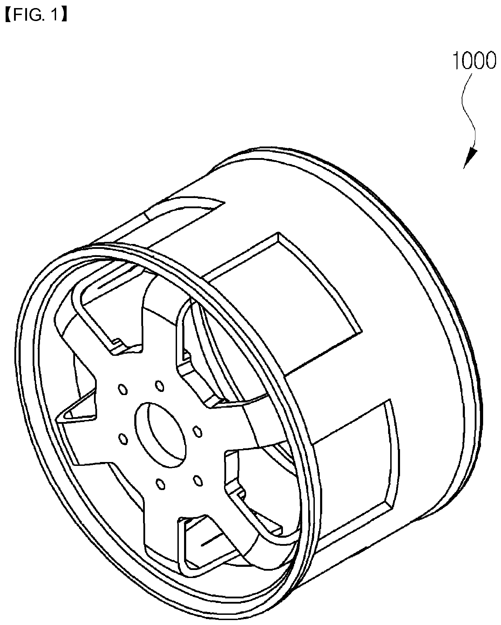

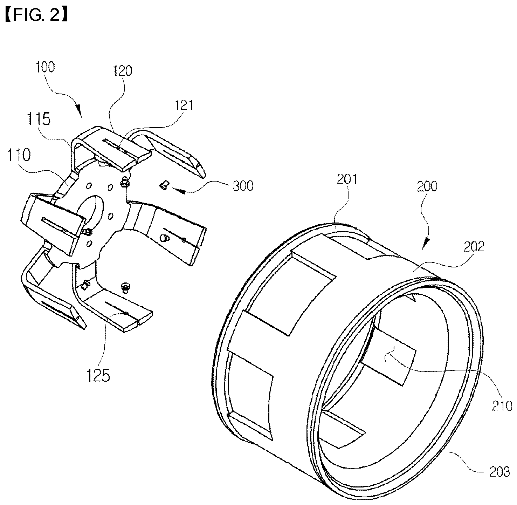

A schematic assembled perspective view of a vehicular composite wheel 1000 (hereinafter, referred to as a wheel) according to an exemplary embodiment of the present invention is illustrated in FIG. 1, and a schematic exploded perspective view of the wheel 1000 according to an exemplary embodiment of the present invention is illustrated in FIG. 2. As illustrated, the wheel 1000 is configured to include a spoke portion 100, a rim portion 200, and fastening members 300.

Particularly, in the wheel 100 according to an exemplary embodiment of the present invention, first coupling portions 120 bent and extended from distal ends of spokes of the spoke portion 100 to the rim portion 200 are fitted and coupled into second coupling portions 210 of the rim portion 200, and are firmly fixed through the fastening members 300. A bolt in which a general screw thread is formed may be used as the fastening member 300.

Hereinafter, a detailed configuration of the wheel 1000 according to an exemplary embodiment of the present invention having the configuration as described above will be described in detail with reference to the drawings.

Referring to FIG. 2, the spoke portion 100 is configured to include a hub 110 disposed at the center, a plurality of spokes 115 extended outwardly of the wheel around the hub 110, and the first coupling portions 120 bent and extended from the distal ends of the spokes 115 to the rim portion 200.

The hub 110, which is a component connecting the wheel 1000 to a shaft of a vehicle, may have bolt connection holes (not illustrated in the drawings), and the like, formed therein.

The plurality of spokes 115, which are components extended from the hub 110 outwardly of the wheel in an axial direction to connect and support the hub 110 and the rim portion 200 to each other, may be formed radially from the center of the hub 110. A 6-spoke wheel in which the number of spokes 115 is six is illustrated in the drawings, but it is obvious that the present invention may also be applied to a 4-spoke wheel or a 5-spoke wheel.

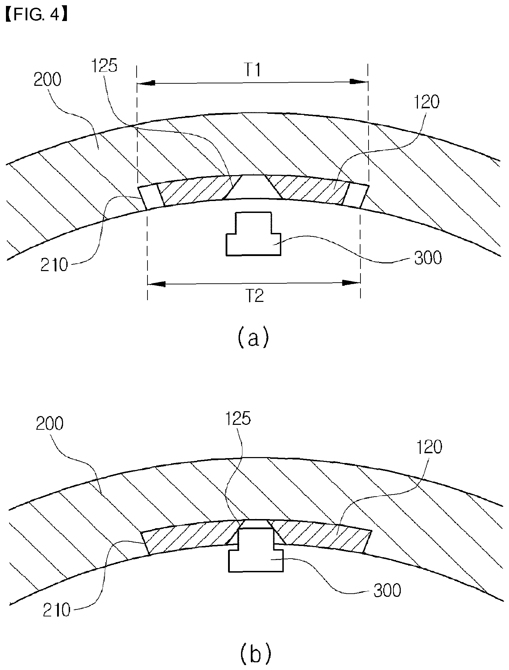

The first coupling portions 120, which are components coupling the spoke portions 100 to the rim portion 200, may be bent from the distal ends of the spokes 115 to the rim portion. A wedge groove 121 is formed in the axial direction of the wheel on the first coupling portion 120. The wedge groove 121 is depressed inwardly from an outer surface of the first coupling portion 120 in a radial direction. A width of the wedge groove 121 in a circumferential direction is decreased toward an inner diameter direction of the wheel. A fastening hole 125 for coupling of the fastening member 300 described above is formed on the wedge groove 121. A female screw thread is formed in an inner peripheral surface of the fastening hole 125, and a diameter of the fastening hole 125 is decreased toward an outer diameter direction of the wheel (see FIGS. 4A and 4B). Through the configuration as described above, the first coupling portion 120 is configured so that a width thereof in the circumferential direction is increased at the time of coupling the fastening member 300 to the first coupling portion 120, such that the first coupling portion 120 is more firmly fitted and coupled through the coupling of the fastening member 300 in a state in which it is fitted and coupled into the second coupling portion 210.

The spoke portion 100 having the configuration as described above is formed of a composite of a reinforced fiber material such as a carbon fiber or a glass fiber or a general metal.

The rim portion 200 is mainly divided into an outer rim 201, a center rim 202, and an inner rim 203, and includes the second coupling portions 210 that are formed on the center rim 202 and into which the first coupling portions 120 are fitted and coupled.

The center rim 202 may be formed in an annular shape having a predetermined thickness and length, the outer rim 201 may be formed outside the center rim 202 in the vehicle, and the inner rim 203 may be formed inside the center rim 202 in the vehicle. The spoke portion 100 described above is fitted and coupled into the center rim 202 through an inner peripheral surface of the outer rim 201. In more detail, the spoke portion 100 described above may be coupled into the center rim 202 so that outer surfaces of the first coupling portions 120 in the wheel are in contact with an inner surface of the center rim 202 in the wheel. Therefore, the second coupling portions 210 corresponding to the first coupling portions 120 are formed on a circumferential surface of the center rim 202, and the second coupling portions 210 are formed radially on the circumferential surface of the center rim 202 by the number corresponding to that of first coupling portions 120. The second coupling portions 210 may be formed in the axial direction, and may protrude outwardly of the circumferential surface of the center rim 202.

The rim portion 200 having the configuration as described above may be formed of a composite of a reinforced fiber material such as a carbon fiber or a glass fiber, and may be formed by stacking, heating, pressing, and then hardening prepreg. Thermosetting resins or thermoplastic resins may be used as the prepreg.

Here, the wheel 1000 according to the present invention may have the following configuration in order to prevent the spoke portion 100 from being separated in an outward axial direction.

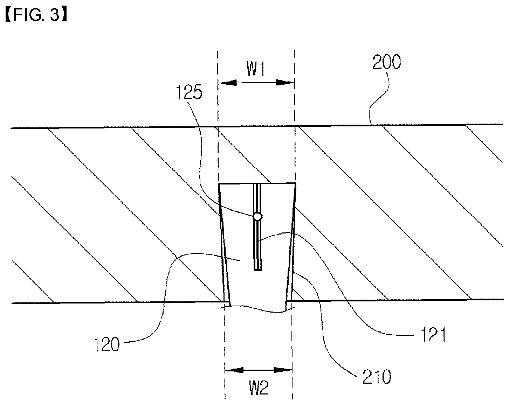

A coupled plan view of the first coupling portion 120 and the second coupling portion 210 of the spoke and the rim according to an exemplary embodiment of the present invention is illustrated in FIG. 3. As illustrated, a width of the second coupling portion 210 in the circumferential direction is decreased toward the outward axial direction of the wheel. That is, an inner width W1 of the second coupling portion may be greater than an outer width W2 of the second coupling portion. Therefore, when the first coupling portion 120 is coupled onto the second coupling portion 210, separation of the first coupling portion 120 in the outward axial direction is prevented. Although not illustrated in the drawing, a width of the first coupling portion 120 in the circumferential direction may be decreased toward the outward axial direction for the purpose as described above.

In addition, the wheel 1000 according to the present invention may have the following configuration in order to prevent the spoke portion 100 from being separated in the inner diameter direction.

Coupled cross-sectional views of the first coupling portion 120 and the second coupling portion 210 of the spoke and the rim according to an exemplary embodiment of the present invention are illustrated in FIGS. 4A and 4B. As illustrated, a thickness of the second coupling portion 210 in the radial direction is decreased toward the inner diameter direction of the wheel. That is, an outer thickness T1 of the second coupling portion may be greater than an inner thickness T2 of the second coupling portion. Therefore, when the first coupling portion 120 is coupled onto the second coupling portion 210, separation of the first coupling portion 120 in the inner diameter direction is prevented. Although not illustrated in the drawing, a thickness of the first coupling portion 120 in the radial direction may be decreased toward the inner diameter direction for the purpose as described above.

As illustrated in FIG. 4A, before the fastening member 300 is fastened into the fastening hole 125, a clearance exists between the first coupling portion 120 and the second coupling portion 210, such that the spoke portion 100 and the rim portion 200 are easily fastened to each other. In addition, as illustrated in FIG. 4B, when the fastening member 300 is fastened into the fastening hole 125 of which a diameter is decreased toward an inward direction, a width of the first coupling portion 120 in the circumferential direction is increased, such that the first coupling portion 120 may be firmly fixed to the second coupling portion 210.

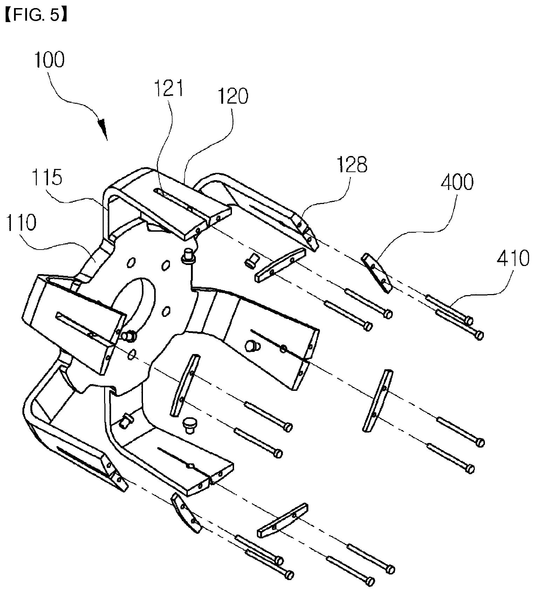

A perspective view of a spoke portion 100 according to another exemplary embodiment of the present invention is illustrated in FIG. 5. As illustrated, the spoke portion 100 is configured to further include support blocks 400 and support block fastening members 410. The support block 400 is coupled to a distal end of the first coupling portion 120, and is configured to have a cross-sectional area greater than that of the first coupling portion 120 to allow a step to be formed between the support block 400 and the second coupling portion 210 when the support block 400 is coupled to the first coupling portion 120, thereby preventing the first coupling portion 120 from being separated in the outward axial direction. Therefore, the support block 400 may be fastened to the first coupling portion 120 in a state in which the spoke portion 100 is coupled to the rim portion 200.

The first coupling portion 120 and the support block 400 may be fixed to each other by bolt-coupling the support block fastening member 410 to a support block fastening hole 128 formed in the first coupling portion 120.

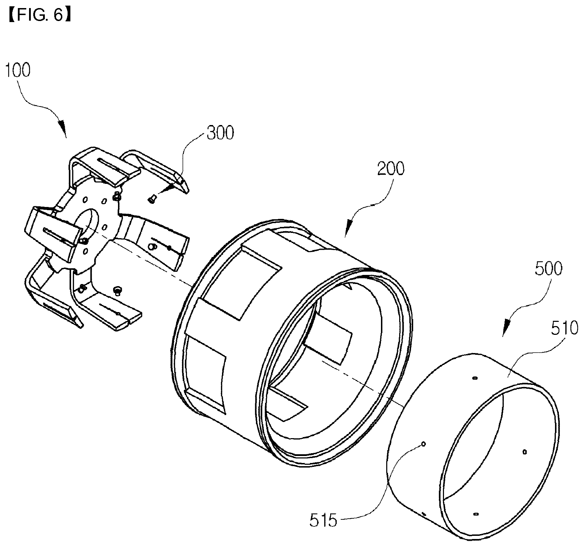

An exploded perspective view of a wheel 1000 according to another exemplary embodiment of the present invention is illustrated in FIG. 6. As illustrated, the wheel 1000 is configured to further include an auxiliary rim 500. The auxiliary rim 500 has an annular shape, and is configured so that an outer peripheral surface thereof is fitted and coupled into an inner peripheral surface of the rim portion 200. Particularly, the first coupling portions 120 are positioned between the auxiliary rim 500 and the rim portion 200, such that separation of the first coupling portions 120 in the inner diameter direction is prevented.

The auxiliary rim 500 includes an auxiliary body 510 having an annular shape and auxiliary fastening holes 515 penetrating through the auxiliary body 510 and corresponding to the fastening holes 125. Therefore, in a state in which the auxiliary rim 500 is fitted into the rim portion 200, the fastening members 300 penetrate through the auxiliary fastening holes 515 and are bolt-coupled to the fastening holes 125.

The composite wheel 1000 having the structure as described above may be automatically produced through simplification of the fastening portion of the spoke portion 100 and the rim portion 200, such that it is expected that the composite wheel may be used at a relatively low cost in a general vehicle market.

The present invention is not to be construed as being limited to the above-mentioned exemplary embodiment. The present invention may be applied to various fields and may be variously modified by those skilled in the art without departing from the scope of the present invention claimed in the claims. Therefore, it is obvious to those skilled in the art that these alterations and modifications fall in the scope of the present invention.

## Claims

1. A vehicular composite wheel fastening structure of a vehicular composite wheel including a spoke portion including a plurality of spokes and a rim portion coupled to the spoke portion and having an annular shape, comprising:
first coupling portions bent and extended from distal ends of each of the spokes of the spoke portion toward the rim portion and including wedge grooves formed in an axial direction of the wheel and fastening grooves formed on the wedge grooves;
a plurality of second coupling portions formed along a circumference of the rim portion so that the first coupling portions are fitted and coupled thereinto; and
fastening members coupled to the wedge grooves,
wherein in the first coupling portion , a width of the wedge groove in a circumferential direction is increased at the time of coupling the fastening member to the first coupling member.

2. The vehicular composite wheel fastening structure of claim 1, wherein a diameter of the fastening hole is decreased toward an outer diameter direction of the wheel.

3. The vehicular composite wheel fastening structure of claim 1, wherein a width of the first coupling portion or the second coupling portion in the circumferential direction is increased toward an inward axial direction of the wheel.

4. The vehicular composite wheel fastening structure of claim 1, wherein a thickness of the first coupling portion or the second coupling portion in a radial direction is increased toward an inner diameter direction of the wheel.

5. The vehicular composite wheel fastening structure of claim 1, wherein the width of the wedge groove in the circumferential direction is decreased toward an inner diameter direction of the wheel.

6. The vehicular composite wheel fastening structure of claim 1, wherein support blocks having cross-sectional areas greater than those of the first coupling portions are coupled to distal ends of the first coupling portions.

7. The vehicular composite wheel fastening structure of claim 1, wherein the composite wheel includes an auxiliary rim of which an outer peripheral surface is fitted and coupled into an inner peripheral surface of the rim portion, and
the first coupling portions are fitted and coupled between the rim and the auxiliary rim.

8. The vehicular composite wheel fastening structure of any one of claims 1 to 7, wherein the spoke portion or the rim portion is formed of a composite obtained by stacking and then hardening prepreg.
